# EUROPÄISCHE PATENTSCHRIFT

(11) **EP 0 665 634 B1**
(45) Veröffentlichungstag und Bekanntmachung des Hinweises auf die Patenterteilung: **14.05.1997**
(21) Anmeldenummer: 94101400.3
(22) Anmeldetag: 31.01.1994
(51) Int. Cl.: H02M 7/217

(54) **Schaltungsanordnung mit einem Feldeffekttransistor**
Circuit arrangement with a field effect transistor
Circuit avec un transistor à effet de champ

(43) Veröffentlichungstag der Anmeldung: 02.08.1995
(73) Patentinhaber: SIEMENS AKTIENGESELLSCHAFT, 80333 München (DE)
(72) Erfinder: Friedl, Karl, Dipl.-Ing., D-86159 Augsburg (DE)

(56) Entgegenhaltungen:
- EP-A- 0 529 180
- WO-A-85/01161
- WO-A-89/05058
- DE-A- 3 429 572

## Beschreibung

Die Erfindung bezieht sich auf eine wie im Oberbegriff des Patentanspruchs 1 angegebene Schaltungsanordnung mit einem Feldeffekttransistor.

Eine derartige Schaltungsanordnung ist bereits aus der DE-A1 34 29 572 bekannt. Die bekannte Schaltungsanordnung enthält einen Leistungs-Feldeffekttransistor mit Inversdiode, der mit Hilfe einer Steuerschaltung steuerbar ist und dient als Vorrichtung nach Art einer Diode, die im leitend gesteuerten Zustand einen sehr geringen Spannungsabfall aufweist. Die Steuerschaltung besteht aus einer Differenzverstärkerstufe und einer dazu in Kette geschalteten Treiberstufe. Die Differenzverstärkerstufe vergleicht eine Speisespannung mit der Spannung einer Pufferbatterie. Die Steuerschaltung schaltet den Leistungs-Feldeffekttransistor durch, wenn die Speisespannung die Spannung der Pufferbatterie übersteigt. In diesem Fall wird die Inversdiode des Feldeffekttransistors in Durchlaßrichtung beansprucht.

Bei der bekannten Schaltungsanordnung enthält die Differenzverstärkerstufe zwei Transistoren, deren Emitter mittelbar miteinander verbunden sind. Der Eingang der ferenzverstärkerstufe ist durch die Basisanschlüsse der beiden emittergekoppelten Transistoren gebildet. Als Treiberstufe dient ein Transistor, dessen Basis am Ausgang der Differenzverstärkerstufe liegt und dessen Emitter-Kollektorstrecke zwischen einer Hilfsspannung und dem Gate des Feldeffekttransistors angeordnet ist. Die Differenzverstärkerstufe benötigt zwei Hilfsspannungen. Die eine der beiden Hilfsspannungen steht sowohl der Differenzverstärkerstufe als auch der Treiberstufe zur Verfügung. Die weitere Hilfsspannung wird von der Pufferbatterie geliefert, die in der Einrichtung zur unterbrechnungsfreien Spannungsversorgung zur Verfügung steht.

Ferner ist aus der DE-C1 38 34 867 bereits eine Schaltungsanordnung für die Parallelschaltung von gungseinrichtungen bekannt, bei der ein Verbraucher über je einen Feldeffekttransistor an zwei Stromversorgungseinrichtungen angeschlossen ist und die Feldeffekttransistoren jeweils mit Hilfe einer Steuervorrichtung wahlweise in den leitenden oder in den gesperrten Zustand überführbar sind. Die Steuervorrichtung besteht jeweils aus einem Operationsverstärker, dessen Eingang an die Drain-Source-Strecke des zugeordneten Feldeffekttransistors angeschlossen ist. Da die am Eingang eines Operationsverstärkers zulässige Spannung vergleichsweise klein ist, kann die Schaltungsanordnung nur Dioden ersetzen, an deren Sperrvermögen nur geringe Anforderungen gestellt werden.

Aufgabe der Erfindung ist es, eine Schaltungsanordnung mit einem durch eine Steuerschaltung steuerbaren Feldeffekttransistor derart auszubilden, daß die Steuerschaltung mit nur einer Hilfsspannung auskommt und daß die Schaltungsanordnung in der Lage ist, auch vergleichsweise große Spannungen zu sperren.

Gemäß der Erfindung wird die Schaltungsanordnung zur Lösung dieser Aufgabe in der im kennzeichnenden Teil des Patentanspruchs 1 angegebenen Weise ausgebildet.

Durch die erfindungsgemäßen Maßnahmen ergibt sich in vorteilhafter Weise eine Schaltungsanordnung, die es gestattet, vergleichsweise große Spannungen schnell zu sperren, einen relativ kleinen Leistungsverbrauch der Ansteuerung aufweist und die mit nur einer Hilfsspannung auskommt.

Eine zweckmäßige Ausgestaltung der Treiberstufe ist in Anspruch 2 angegeben.

Die Transistoren 7 und 8 einerseits und die Dioden 9 und 10 andererseits sind zweckmäßigerweise jeweils vom gleichen Typ und vorzugsweise derart ausgewählt oder ausgebildet, daß sie hinsichtlich ihrer Schwellenspannungen möglichst weitgehend übereinstimmen.

Die Weiterbildung nach Anspruch 3 hat den Vorteil, daß sich verbleibende Unterschiede der Schwellenspannungen auf besonders einfach realisierbare Weise kompensieren lassen.

Aus Anspruch 4 geht ein Sperrumrichter mit einer Schaltungsanordnung nach einem der Ansprüche 1 bis 3 hervor.

In Anspruch 5 ist ein Durchflußumrichter angegeben, der zwei Schaltungsanordnungen enthält, wie sie in einem der Ansprüche 1 bis 3 angegeben sind.

Die Erfindung wird anhand der in den Figuren 1 bis 3 gezeigten Ausführungsbeispiele näher erläutert.

Es zeigen
- Fig. 1: eine Schaltungsanordnung mit einem Feldeffekttransistor und einer Steuerschaltung,
- Fig. 2: einen Sperrumrichter mit einer als Gleichrichterdiode dienenden Schaltungsanordnung und
- Fig. 3: einen Durchflußumrichter, bei dem eine Gleichrichterdiode und eine Freilaufdiode jeweils als Schaltungsanordnung mit Feldeffekttransistor und Steuerschaltung ausgebildet sind.

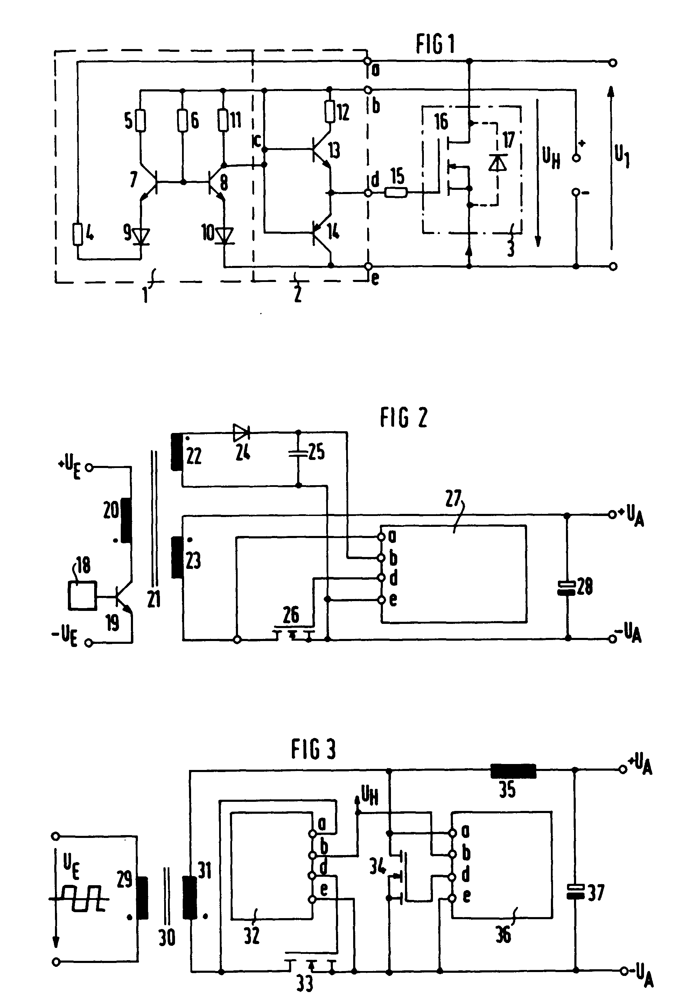

Die in Fig. 1 gezeigte Schaltungsanordnung hat das Verhalten einer Diode, die sich in Abhängigkeit von der Polarität der an der Diode anliegenden Spannung wahlweise in einen besonders niederohmig leitenden oder gesperrten Zustand steuern läßt. Der Feldeffekttransistor 3 ist im gezeigten Beispiel vom Typ selbstsperrender N-Kanal-Mosfet und besteht aus dem eigentlichen Feldeffekttransistor 16 und der parallel zu dessen Drain-Source-Strecke wirksamen Inversdiode 17.

Der Feldeffekttransistor 3 wird mit Hilfe der Steuerschaltung 1, 2 gesteuert, deren Eingang an die Drain-Source-Strecke des Feldeffekttransistors 3 angeschlossen ist und deren Ausgang d über den Widerstand 15 an das Gate des Feldeffekttransistors 3 geführt ist. Die Steuerschaltung besteht aus der Differenzverstärkerstufe 1 und der dazu in Kette geschalteten Treiberstufe 2.

Die Differenzverstärkerstufe 1 enthält die beiden Transistoren 7 und 8 vom Typ npn. Die Basisanschlüsse der Transistoren 7 und 8 sind unmittelbar miteinander verbunden und über den Widerstand 6 zum Anschluß b und von dort an die Hilfsspannung U_{H} geführt. Der Kollektor des Transistors 7 ist über den Widerstand 5, der Kollektor des Transistors 8 über den Widerstand 11 mit dem Anschluß b verbunden. Der Emitter des Transistors 7 ist über die Diode 9 und den dazu in Serie liegenden Widerstand 4 an den Anschluß a, der Emitter des Transistors 8 über die Diode 10 an den Anschluß e geführt.

Die Treiberstufe 2 enthält die beiden Transistoren 13 und 14. Der Kollektor des npn-Transistors 13 ist über den Widerstand 12 an den Anschluß b, der Kollektor des pnp-Transistors 14 unmittelbar an den Anschluß e verbunden. Die Emitter der Transistoren sind unmittelbar miteinander verbunden. Die Basisanschlüsse der Transistoren 13 und 14 sind ebenfalls unmittelbar miteinander verbunden. Die Basisverbindung der Transistoren 13 und 14 ist an den Ausgang c der Differenzverstärkerstufe angeschlossen, der durch den Kollektor des Transistors 8 gebildet ist. Die Emitterverbindung der Transistoren 13 und 14 bildet den Ausgang d der Treiberstufe 2, der über den Widerstand 15 an das Gate des Feldeffekttransistors 16 geführt ist.

Die Transistoren 7 und 8 der Differenzverstärkerstufe 1 sind vom gleichen, die Transistoren 13 und 14 der Treiberstufe 2 von einander entgegengesetztem Leitfähigkeitstyp. Der Widerstand 4 und/oder der Widerstand 15 kann gegebenenfalls durch eine direkte Verbindung ersetzt sein.

Zwischen den Anschlüssen a und e der Steuerschaltung 1, 2 liegt die Drain-Source-Strecke des Feldeffekttransistors 3. Dabei ist das Drain mit dem Anschluß a und die Source mit dem Anschluß e verbunden. Zwischen den Anschlüssen e und a liegt die Spannung U1, zwischen den Anschlüssen b und e die Spannung U_{H}.

Die Hilfsgleichspannung U_{H} beträgt z.B. 12 Volt. Dabei ist nur ein geringer Versorgungsstrom, z.B. 5 mA erforderlich.

Die Ansteuerschaltung 1, 2 steuert abhängig von der Richtung der zwischen Drain und Source des MOSFET 3 angelegten Spannung U1 das Gate des MOSFET 3 an. Ist die Spannung U1 negativ, sperrt die Diode 17. Bei positiver Spannung U1 wird der MOSFET 3 leitend gesteuert, so daß die im MOSFET 3 bereits enthaltene parasitäre Diode 17 niederohmig überbrückt wird. Der Feldeffekttransistor 16 ist somit bei einer die Inversdiode 17 in Durchlaßrichtung beanspruchenden Spannung leitend und bei einer die Inversdiode 17 in Sperrichtung beanspruchenden Spannung gesperrt.

Damit verhält sich der MOSFET 3 wie eine Diode mit extrem geringer Durchlaßspannung. Die Ansteuerschaltung 1, 2 reagiert in vorteilhafter Weise so schnell, daß ein Einsatz sowohl bei langsamen als auch bei schnellen Gleichrichteranwendungen möglich ist.

Die Transistoren 7 und 8 haben möglichst gleiche Schwellenspannungen und sind daher insbesondere gleichartige, temperaturmäßig gekoppelte Kleinsignaltransistoren, vorzugsweise ein integriertes Transistorenpaar. Die Dioden 9 und 10 sind zweckmäßigerweise ebenfalls einander gleichartig und temperaturmäßig gekoppelt, vorzugsweise ein integriertes Diodenpaar. Dabei kann es zweckmäßig sein, den Differenzverstärker 1 und/oder die Treiberstufe 2 als integrierte Schaltung auszubilden, die gegebenenfalls auch zusammen mit dem Feldeffekttransistor 3 integriert werden kann.

Die Diode 9, die insbesondere eine Kleinsignaldiode ist, wird mit der maximalen Sperrspannung belastet. Die Dioden 9 und 10 sind demnach entsprechend der zulässigen Sperrspannung des MOSFET 3 insbesondere entweder Schottkydioden oder Siliziumdioden.

Am Widerstand 4 fällt bei leitendem Transistor 7 eine geringe Spannung ab. Mit dieser Spannung wird eine Schwellspannung, z.B. 50 mV, eingestellt, um einen definierten Einsatzpunkt für das Leiten des MOSFET 3 zu schaffen. Diese Einstellung des Einsatzpunktes berücksichtigt Schwellspannungstoleranzen der Transistoren 7 und 8 und der Dioden 9 und 10.

Falls die Drainspannung des MOSFET um mindestens die durch den Widerstand 4 bestimmte Schwellspannung weiter im negativen Bereich liegt als die Sourcespannung, fließt der vom Widerstand 6 aus der Hilfsspannung U_{H} gelieferte Basisstrom über den Transistor 7, so daß der Transistor 8 sperrt und über den Widerstand 11 ein vom Transistor 13 verstärkter Strom zur Aufladung der Gatekapazität des MOSFET 3 geliefert wird. Andernfalls fließt der vom Widerstand 6 gelieferte Basisstrom über den Transistor 8, so daß der Transistor 8 leitet und die Gatekapazität mit einem über den Transistor 14 verstärkten Strom entladen wird.

Der Widerstand 12 dient dazu, eventuell über die Transistoren 13 und 14 fließende Querströme zu begrenzen und ein Ansteuern des Gate des MOSFET 3 mit definiertem Strom zu erreichen. Er kann gegebenenfalls durch eine direkte Verbindung zwischen dem Kollektor des Transistors 13 und dem Drain des MOSFET 3 ersetzt sein.

Die Schaltungsanordnung nach Fig. 1 kann insbesondere sowohl in Stromversorgungseinrichtungen mit Umrichter, z.B. Schaltnetzteilen, als auch in anderen Schaltungen, in denen Leistungsgleichrichter benötigt werden, vorteilhaft verwendet werden. Insbesondere eignet sich die Schaltungsanordnung für Umrichter mit großem Variationsbereich der Eingangspannung und/oder der Last.

Die Flußspannung der Gleichrichterdioden stellt in der Leistungselektronik, insbesondere bei der Gleichrichtung niedriger Wechselspannungen, eine Begrenzung des erreichbaren Wirkungsgrads dar. Verwendet man die Schaltungsanordnung nach Fig. 1 anstelle derartiger Dioden, so können die Durchlaßverluste deutlich gesenkt werden. Dadurch ergibt sich insbesondere eine Einsparung von Energie und von Hilfsmitteln zur Bereitstellung und Abfuhr der Verlustenergie.

Als bevorzugte Anwendungen der beschriebenen Schaltungsanordnung in Stromversorgungsschaltungen zeigt Fig. 2 einen Sperrumrichter und Fig. 3 einen Durchflußumrichter.

Der in Fig. 2 gezeigte Sperrumrichter enthält eine im sekundärseitigen Hauptstromkreis angeordnete Gleichrichterdiode.

Der Sperrumrichter enthält im primärseitigen Hauptstromkreis die Primärwicklung 20 des Transformators 21 und als Leistungsschalter den durch die Ansteuerschaltung 18 gesteuerten Transistor 21. Im sekundärseitigen Hauptstromkreis sind die Sekundärwicklung 23 und die Drain-Source-Strecke des als Gleichrichterdiode dienenden Feldeffekttransistors 26 in Serie zueinander angeordnet. Am Ausgang des Sperrumrichters liegt der Kondensator 28. Der Sperrumrichter erzeugt aus der Eingangsgleichspannung U_{E} durch Zerhacken, Transformation und Gleichrichtung die Ausgangsgleichsspannung U_{A}. Die Gleichrichterdiode ist durch den MOSFET 26 mit der Ansteuerschaltung 27 gebildet. Zur Versorgung der Ansteuerschaltung 27 mit der Hilfsspannung U_{H} dient ein Hilfskreis, in dem die Zusatzwicklung 22 des Transformators 21 und der Gleichrichter 24 in Serie angeordnet sind und an dessen Ausgang der Kondensator 25 liegt.

Fig. 3 zeigt einen Durchflußumrichter, dessen Primärwicklung 29 des Transformators 30 Rechteckimpulse abwechselnder Polarität zugeführt werden. In dem an die Sekundärwicklung 31 des Transformators 30 angeschlossenen sekundärseitigen Hauptstromkreis ist in einem Längszweig eine Gleichrichterdiode in einem darauf folgenden Querzweig eine Freilaufdiode angeordnet. Auf die Freilaufdiode folgt ein Längszweig mit der Drossel 35 und ein Querzweig mit dem Kondensator 37. Die Gleichrichterdiode und die Freilaufdiode sind jeweils als Schaltungsanordnung nach Fig. 1 ausgebildet. Die Ausgangsspannung U_{A} steht am Kondensator 37 zur Verfügung.

Die Dioden sind durch die MOSFET 33 und 34 mit den Ansteuerschaltungen 32 und 36 ersetzt. Die beiden MOSFET 32 und 36 sind so angeordnet, daß beide Sourceanschlüsse auf gleichem Potential liegen. Damit kann eine gemeinsame Hilfsspannung U_{H} verwendet werden. Die Hilfsspannung U_{H} wird zweckmäßigerweise in ähnlicher Weise wie in Fig. 2 gezeigt aus der Speicherdrossel 35 oder dem Übertrager 30 erzeugt.

Bei den Gleichspannungs-Umrichtern nach Fig. 2 und 3 ergibt sich, insbesondere bei vergleichsweise kleinen gangsspannungen von z.B. 3 Volt, eine deutliche Steigerung des Wirkungsgrads gegenüber Umrichtern mit den üblichen Schottky- oder Silizium-Gleichrichterdioden.

## Patentansprüche

1. Schaltungsanordnung mit einem Feldeffekttransistor (3) und mit einer aus einer Differenzverstärkerstufe (1) und einer der Differenzverstärkerstufe (1) nachgeschalteten Treiberstufe (2) bestehenden Steuerschaltung, wobei der Eingang der Differenzverstärkerstufe (1) mit der Drain-Source-Strecke des Feldeffekttransistors (3) und der Ausgang der Differenzverstärkerstufe (1) mit dem Gate des Feldeffekttransistors (3) verbunden und der Feldeffekttransistor (3) mit Hilfe der Steuerschaltung in Abhängigkeit von der Polarität der an die Drain-Source-Strecke angelegten Spannung derart in den leitenden oder gesperrten Zustand überführbar ist, daß er bei einer die Inversdiode (17) des Feldeffekttransistors in Durchlaßrichtung beanspruchenden Spannung leitend und bei einer die Inversdiode (17) in Sperrichtung beanspruchenden Spannung gesperrt ist,
**dadurch gekennzeichnet,**
daß die Differenzverstärkerstufe (1) zwei Transistoren (7, 8) vom selben Leitfähigkeitstyp enthält, deren Basisanschlüsse unmittelbar miteinander verbunden und über einen Widerstand (6) an eine Hilfsspannung (U_{H}) geführt sind, deren Kollektoren jeweils über einen Widerstand (5, 11) an eine Hilfsspannung (U_{H}) gelegt sind und von deren Emittern der eine über eine Diode (9) mit dem Drain und der andere über eine Diode (10) mit der Source des Feldeffekttransistors (3) verbunden ist und daß der Ausgang der Differenzverstärkerstufe (1) am Kollektor eines der beiden Transistoren (8) liegt.

2. Schaltungsanordnung nach Anspruch 1,
**dadurch gekennzeichnet,**
daß die Treiberstufe (2) zwei Transistoren (13, 14) von einander entgegengesetztem Leitfähigkeitstyp enthält, deren Emitter über eine Emitterverbindung und deren Basisanschlüsse über eine Basisverbindung miteinander verbunden sind und daß die Basisverbindung an den Ausgang (c) der Differenzverstärkerstufe angeschlossen ist und daß die Emitterverbindung an das Gate des Feldeffekttransistors (14) geführt ist.

3. Schaltungsanordnung nach Anspruch 1 oder 2
**dadurch gekennzeichnet,**
daß in der zwischen dem Emitter des anderen der beiden Transistoren (7) der Differenzverstärkerstufe (1) und dem Drain des Feldeffekttransistors (3) in Serie zur Diode (9) ein Widerstand (4) angeordnet ist.

4. Sperrumrichter mit einer im sekundärseitigen Hauptstromkreis angeordneten Gleichrichterdiode,
**dadurch gekennzeichnet,**
daß die Gleichrichterdiode eine Schaltungsanordnung (26, 27) nach einem der Ansprüche 1 bis 3 ist.

5. Durchflußumrichter, in dessen sekundärseitigem Hauptstromkreis eine Gleichrichterdiode und eine darauf folgende Freilaufdiode angeordnet sind,
**dadurch gekennzeichnet,**
daß die Gleichrichterdiode und/oder die Freilaufdiode jeweils als Schaltungsanordnung (32, 33, 34, 36) nach einem der Ansprüche 1 bis 3 ausgebildet ist.

## Claims

1. Circuit arrangement with a field-effect transistor (3) and with a control circuit comprising a differential amplifier stage (1) and a driver stage (2) which is connected downstream of the differential amplifier stage (1), the input of the differential amplifier stage (1) being connected to the drain-source path of the field-effect transistor (3) and the output of the differential amplifier stage (1) being connected to the gate of the field-effect transistor (3), and it being possible to change the field-effect transistor (3) over to the on or off state with the aid of the control circuit as a function of the polarity of the voltage applied to the drain-source path in such a way that the said field-effect transistor is in the on state for a voltage which broad-biases the inverse diode (17) of the field-effect transistor and is in the off state for a voltage which reverse-biases the inverse diode (17), characterized in that the differential amplifier stage (1) contains two transistors (7, 8) of the same conductivity type, the base terminals of which transistors (7, 8) are connected directly to one another and, via a resistor (6), to an auxiliary voltage (U_{H}), the collectors of which transistors (7, 8) are respectively connected via a resistor (5, 11) to an auxiliary voltage (U_{H}) and of the emitters of which transistors (7, 8), one is connected via a diode (9) to the drain and the other via a diode (10) to the source of the field-effect transistor (3), and in that the output of the differential amplifier stage (1) is connected to the collector of one of the two transistors (8).

2. Circuit arrangement according to Claim 1, characterized in that the driver stage (2) contains two transistors (13, 14) of mutually opposite conductivity types, the emitters of which transistors (13, 14) are connected to one another via an emitter junction and the base terminals of which transistors (13, 14) are connected to one another via a base junction, and in that the base junction is connected to the output (c) of the differential amplifier stage, and in that the emitter junction is connected to the gate of the field-effect transistor (14).

3. Circuit arrangement according to Claim 1 or 2, characterized in that a resistor (4) is arranged in series with the diode (9) in the said circuit arrangement between the emitter of the other of the two transistors (7) of the differential amplifier stage (1) and the drain of the field-effect transistor (3).

4. Flyback converter having a rectifier diode arranged in the main circuit on the secondary side, characterized in that the rectifier diode is a circuit arrangement (26, 27) according to one of Claims 1 to 3.

5. Forwards converter, in whose main circuit on the secondary side a rectifier diode and a downstream freewheeling diode are arranged, characterized in that the rectifier diode and/or the freewheeling diode is in each case designed as a circuit arrangement (32, 33, 34, 36) according to one of Claims 1 to 3.

## Revendications

1. Circuit comportant un transistor (3) à effet de champ et un circuit de commande constitué d'un étage (2) d'attaque branché en aval d'un étage (1) amplificateur différentiel, l'entrée de l'étage (1) amplificateur différentiel étant relié à la section source-drain du transistor (3) à effet de champ, et la sortie de l'étage (1) amplificateur différentiel étant reliée à la grille du transistor (3) à effet de champ et le transistor (3) à effet de champ peut à l'aide du circuit de commande, passer à l'état conducteur ou à l'état bloqué, en fonction de la polarité de la tension appliquée à la section source-drain de sorte qu'il est conducteur pour une tension attaquant la diode inverse (17) du transistor à effet de champ dans le sens passant et est bloqué pour une tension attaquant la diode inverse (17) dans le sens bloqué. caractérisé en ce que l'étage (1) amplificateur différentiel comprend deux transistors (7, 8) de types de conductivité identiques, dont les bornes de base sont mutuellement connectées directement et sont soumises à une tension (U_{H}) auxiliaire par l'intermédiaire d'une résistance (6), dont les collecteurs sont soumis chacun à une tension (U_{H}) auxiliaire par l'intermédiaire d'une résistance (5,11) et dont les émetteurs sont, pour l'un, relié au drain du transistor (3) à effet de champ par une diode (9), et pour l'autre, relié à la source du transistor (3) à effet de champ par une diode (10) et en ce que la sortie de l'étage (1) amplificateur différentiel se trouve au collecteur d'un des deux transistors (8).

2. Circuit selon la revendication 1, caractérisé en ce que l'étage (2) d'attaque comprend deux transistors (13, 14) de types de conductivité mutuellement opposés, dont les émetteurs sont mutuellement connectés par un dispositif de connexion d'émetteur et dont les bornes de base sont mutuellement connectées par un dispositif de connexion de base et en ce que le dispositif de connexion de base est relié à la sortie (c) de l'étage amplificateur différentiel et en ce que le dispositif de connexion d'émetteur est relié à la grille du transistor (14) à effet de champ.

3. Circuit selon le revendication 1 ou 2, caractérisé en ce qu'une résistance (4) est disposée en séries vis à vis de la diode (9) entre l'émetteur de l'autre des deux transistors (7) de l'étage (1) amplificateur différentiel et le drain du transistor (3) à effet de champ.

4. Convertisseur de blocage comportant une diode redresseuse disposée dans le circuit du courant principal, du côté secondaire, caractérisé en ce que la diode redresseuse est un circuit (26, 27) suivant l'une des revendications 1 à 3.

5. Convertisseur passant, dans le circuit de courant principal duquel, du côté secondaire, sont disposées une diode redresseuse et, à la suite de celle-ci, une diode de roue libre, caractérisé en ce que la diode redresseuse et/ou la diode de roue libre sont chacune sous la forme d'un circuit (32, 33, 34, 36) suivant l'une des revendications 1 à 3.
